# EUROPÄISCHE PATENTSCHRIFT

(11) **EP 1 573 238 B1**
(45) Veröffentlichungstag und Bekanntmachung des Hinweises auf die Patenterteilung: **19.09.2007**
(21) Anmeldenummer: 03782107.1
(22) Anmeldetag: 26.11.2003
(51) Int. Cl.: F16J 15/32, F01D 11/00

(54) **DICHTUNGSANORDNUNG**
SEALING ARRANGEMENT
ENSEMBLE JOINT

(30) Priorität: 18.12.2002 DE 10259381
(43) Veröffentlichungstag der Anmeldung: 14.09.2005
(73) Patentinhaber: MTU Aero Engines GmbH, 80995 München (DE)
(72) Erfinder: BEICHL, Stefan, 82211 Herrsching (DE)
(86) Internationale Anmeldenummer: PCT/DE2003/003918
(87) Internationale Veröffentlichungsnummer: WO 2004/057218

(56) Entgegenhaltungen:
- EP-A- 0 469 826
- WO-A-01/48887
- US-B1- 6 173 958
- US-B1- 6 378 873

## Beschreibung

Die Erfindung betrifft eine Dichtungsanordnung gemäß dem Oberbegriff des Patentanspruchs 1.

Die hier vorliegende Erfindung bezieht sich auf eine Abdichtung zwischen zwei feststehenden, rotationssymmetrischen Bauteilen. Eine Abdichtung zwischen zwei feststehenden Bauteilen wird auch als statische Dichtung bezeichnet.

Obwohl die Erfindung nachfolgend am Beispiel einer Leitschaufel und eines Gehäuse bzw. eines Trägers einer Gasturbine beschrieben ist, soll die Erfindung auf diesen konkreten Anwendungsfall nicht beschränkt sein. Die Erfindung ist vielmehr überall dort einsetzbar, wo feststehende rotationssymmetrische Bauteile unter Verwendung einer statischen Dichtungsanordnung gegeneinander abzudichten sind. Der Anwendungsbereich der Erfindung ist also nicht auf Gasturbinen oder sonstige Antriebe in der Luftfahrttechnik beschränkt.

Gasturbinen, die zum Beispiel in Flugzeugen als Triebwerke verwendet werden, umfassen in der Regel mehrere in axialer Richtung der Gasturbine hintereinander angeordnete, feststehende Leitschaufeln. Jede der feststehenden Leitschaufeln ist aus mehreren Schaufelsegmenten gebildet, wobei die Schaufelsegmente mit radialem Spiel um ein feststehendes Gehäuse oder einen freistehenden Träger der Gasturbine angeordnet sind. Bei dem Gehäuse bzw. dem Träger und der Leitschaufel handelt es sich um feststehende, rotationssymmetrische Bauteile, die konzentrisch zueinander angeordnet sind.

Um bei einer Gasturbine eine Strömung zwischen der feststehenden Leitschaufel und dem feststehenden Gehäuse zu unterbinden, ist nach dem Stand der Technik zwischen den Schaufelsegmenten der Leitschaufel und dem Gehäuse eine Ringdichtung angeordnet (siehe zB US-B1-6173958). Die Ringdichtung dichtet einen durch das radiale Spiel zwischen den Schaufelsegmenten und dem Gehäuse ausgebildeten Spalt ab. Derartige Ringdichtungen verfügen über den Nachteil, dass dieselben Unregelmäßigkeiten des radialen Spiels und damit des Spalts zwischen den Schaufelsegmenten und dem Gehäuse bzw. Träger nicht ausgleichen können.

So können nämlich die einzelnen Schaufelsegmente einer Leitschaufel unterschiedlich lang ausgebildet sein oder mit radialen Versatz um das Gehäuse herum angeordnet sein. Ferner können Fertigungstoleranzen der gegeneinander abzudichtenden Bauteile für Unregelmäßigkeiten des radialen Spiels und damit des abzudichtenden Spalts sorgen. Im Betrieb einer Gasturbine können sich die einzelnen Schaufelsegmente einer Leitschaufel in Folge von Erwärmungen unterschiedlich stark ausdehnen sowie entwölben. Des weiteren können die Schaufelsegmente während des Betriebs der Gasturbine gekippt werden. All diese Faktoren können auch in Kombination miteinander auftreten und für Abweichungen des abzudichten Spalts in einer Größenordung von 1 bis 2 Millimetern sorgen. Eine durch Ringdichtungen bereitgestellte Dichtung gewährleistet zwar bereits ein hohes Maß an Dichtigkeit, sie vermag jedoch derartige Unregelmäßigkeiten zwischen den gegeneinander abzudichtenden Bauteilen nicht auszugleichen und lässt dann unerwünschte Leckagen zu.

Hiervon ausgehend liegt der vorliegenden Erfindung das Problem zu Grunde, eine verbesserte Dichtungsanordnung zu schaffen.

Dieses Problem wird dadurch gelöst, dass die Eingangs genannte Dichtungsanordnung durch die Merkmale des kennzeichnenden Teils des Patentanspruchs 1 weitergebildet ist.

Dadurch, dass zwischen den rotationssymmetrischen Bauteilen zusätzlich zu der wenigstens einen ersten, als Ringdichtung ausgebildeten Dichtungseinrichtung eine zweite, als Bürstendichtung ausgebildete Dichtungseinrichtung angeordnet ist, lassen sich Unregelmäßigkeiten des radialen Spalts zwischen den rotationssymmetrischen, gegeneinander abzudichtenden Bauteilen ausgleichen, so dass Leckagen vermieden werden. Es werden die Vorteile von Ringdichtungen und Bürstendichtungen miteinander kombiniert.

Nach einer vorteilhaften Weiterbildung der Erfindung umfasst die Bürstendichtungen mehrere Borstenelemente, wobei die Borstenelemente abweichend von der Radialen in Umfangsrichtung angestellt sind, z.B. um 30° bis 60°. Die Borstenelemente können zudem in Axialrichtung angestellt sein, z.B. um 3° bis 10°, insbesondere 6°, und ggf. an der ersten Dichtungseinrichtung anliegen. Hierdurch ergibt sich eine effektive Abdichtung. Leckagen werden auf ein absolutes Minimum reduziert.

Vorzugsweise ist die zweite, als Bürstendichtung ausgebildete Dichtungseinrichtung axial versetzt zu der ersten, als Ringdichtung ausgebildeten Dichtungseinrichtung angeordnet, wobei sich die Bürstendichtung unmittelbar an die Ringdichtung anschließt, und wobei die Ringdichtung eine Stützplatte für die Bürstendichtung bildet. Dies erlaubt einerseits einen einfachen und kompakten Aufbau der erfindungsgemäßen Dichtungsanordnung und andererseits eine besonders effektive Abdichtung.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: eine erfindungsgemäße Dichtungsanordnung in stark schematisierter Vorderansicht,
- Fig. 2:: die erfindungsgemäße Dichtungsanordnung gemäß Fig. 1 im stark schematisierten Querschnitt,
- Fig. 3:: ein Detail einer Bürstendichtung der erfindungsgemäßen Dichtungsanordnung gemäß Fig. 1 und Fig. 2,
- Fig. 4:: ein Detail einer alternativen Bürstendichtung für eine erfindungsgemäße Dichtungsanordnung, und
- Fig. 5:: die alternative Bürstendichtung gemäß Fig. 4 in einem gestauchten Zustand.

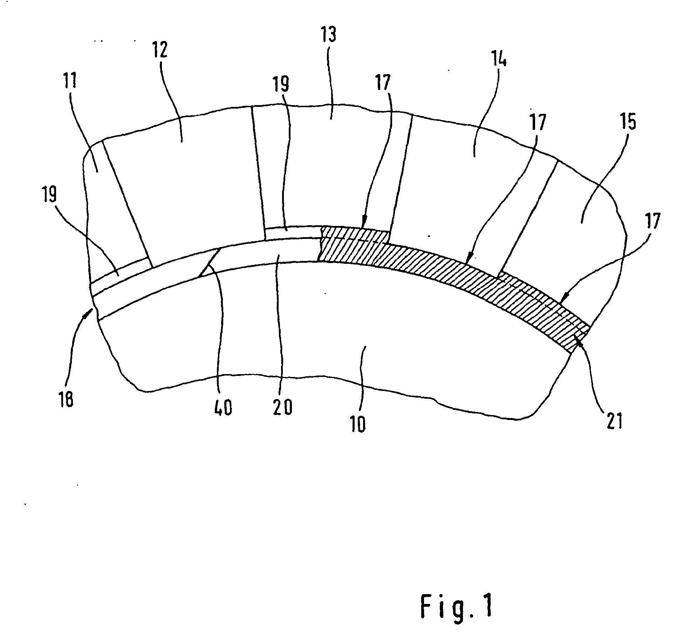

Figur 1 zeigt einen Ausschnitt aus einem Gehäuse 10 einer Gasturbine zusammen mit insgesamt fünf um das Gehäuse 10 herum angeordneten Schaufelsegmenten 11, 12, 13, 14 und 15 einer Leitschaufel in einer stark schematisierten Darstellung. Sowohl das Gehäuse 10 - welches als speichenzentrierter, freistehender Träger ausgebildet sein kann - als auch die die Schaufelsegmente 11, 12, 13, 14 und 15 umfassende Leitschaufel sind feststehend als rotationssymmetrische Bauteile ausgebildet. Die rotationssymmetrische Leitschaufel ist konzentrisch um das rotationssymmetrische Gehäuse 10 angeordnet.

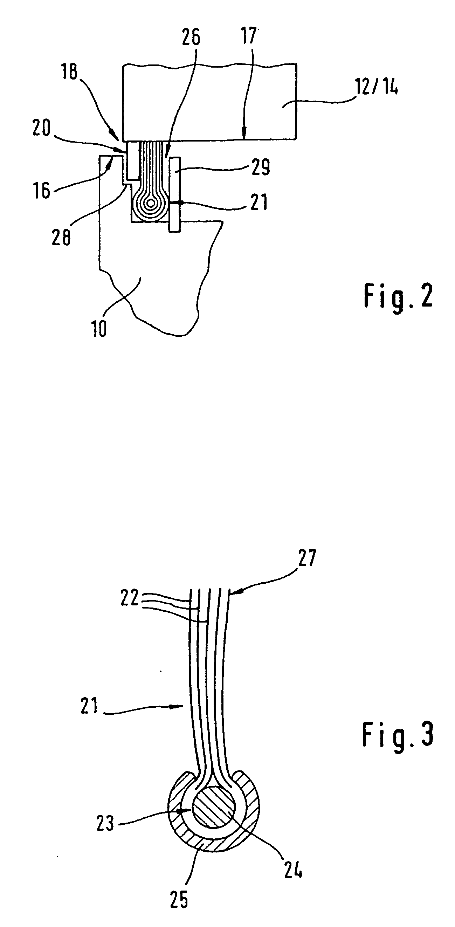

Wie insbesondere Figur 2 entnommen werden kann, welche die Anordnung gemäß Figur 1 in einer gegenüber Figur 1 um 90° gedrehten Schnittdarstellung zeigt, sind das Gehäuse 10 und die Schaufelsegmente 11, 12, 13, 14 und 15 mit radialem Spiel zueinander angeordnet, dass heißt zwischen einer äußeren Kante 16 des Gehäuses 10 und einer inneren Kante 17 der Schaufelsegmente 11, 12, 13, 14 und 15 ist ein Spalt 18 ausgebildet.

Gemäß Figur 1 können dabei die einzelnen Schaufelsegmente 11, 12, 13, 14 und 15 radial zueinander versetzt sein, so dass für einige Schaufelsegmente 11, 13 und 15 der Abstand zwischen ihren inneren Kanten 17 und der äußeren Kante 16 des Gehäuses 10 größer ausgebildet ist als für andere Schaufelsegmente 12 und 14. Im Bereich der Schaufelsegmente 11, 13 und 15 ist der Spalt 18 demnach größer ausgebildet als im Bereich der Schaufelsegmente 12 und 14, was in Figur 1 durch einen Zwischenraum 19 im Bereich der Schaufelsegmente 11, 13 und 15 visualisiert ist. Der Spalt 18 kann demnach über eine unregelmäßige Breite verfügen, was auch durch unterschiedliche Ausdehnungen oder unterschiedliche Neigungen der Schaufelsegmente 11, 12, 13, 14 und 15 während des Betriebs der Gasturbine verursacht sein kann.

Zur Abdichtung des Spalts 18 und der Zwischenräume 19 zwischen der äußeren Kante 16 des Gehäuses 10 und den inneren Kanten 17 der Schaufelsegmente 11, 12, 13, 14 und 15 wird erfindungsgemäß eine Dichtungsanordnung mit zwei Dichtungseinrichtungen vorgeschlagen.

Eine erste Dichtungseinrichtung 20, die zwischen dem Gehäuses 10 und den Schaufelsegmenten 11, 12, 13, 14 und 15 angeordnet ist, ist als Ringdichtung ausgebildet. Die Ringdichtung ist als metallische Kolbenringdichtung ausgeführt. Alternativ kann die Kolbenringdichtung auch aus Kunststoff, Keramik oder anderen geeigneten Werkstoffen bestehen.

Axial versetzt zu dieser Ringdichtung schließt sich unmittelbar an die erste Dichtungseinrichtung 20 eine zweite Dichtungseinrichtung 21 an, wobei die zweite Dichtungseinrichtung 21 als Bürstendichtung ausgebildet ist.

Mit Hilfe der als Ringdichtung ausgebildeten ersten Dichtungseinrichtung 20 lässt sich nur dann eine Abdichtung zwischen dem Gehäuse 10 und den Schaufelsegmenten 11, 12, 13, 14 und 15 mit minimierter Leckage gewährleisten, wenn keine Unregelmäßigkeiten im Spalt 18 zwischen dem Gehäuse 10 und den einzelnen Schaufelsegmenten 11, 12, 13, 14 und 15 vorliegen, der Spalt 18 also durchgängig annähernd die gleiche Breite aufweist. Liegt jedoch zum Beispiel ein radialer Versatz zwischen den einzelnen Schaufelsegmenten 11, 12, 13, 14 und 15 vor oder ist das Gehäuse 10 nicht vollkommen rund ausgebildet, so verfügt der Spalt 18 nicht durchgängig über eine konstante Breite. Die Ringdichtung würde in diesem Fall ihre Dichtigkeit einbüßen und Leckagen zulassen. Für diesen Fall ist die zweite Dichtungseinrichtung 21 von Wichtigkeit. Die zweite Dichtungseinrichtung 21 kann nämlich auf Grund ihrer Ausgestaltung derartige Toleranzen ausgleichen. Dies ist im rechten Teil der Figur 1 stark schematisiert gezeigt.

Figur 3 zeigt die zweite Dichtungseinrichtung 21 in größerem Detail. So umfasst die als Bürstendichtung ausgebildete zweite Dichtungseinrichtung 21 mehrere Borstenelemente 22. Im Bereich einer Einspannstelle 23 sind die Borstenelemente 22 um ein als Seelendraht ausgebildetes Führungselement 24 gewickelt. Weiterhin sind die Borstenelemente 22 am Führungselement 24 mit Hilfe eines Klemmelements 25 fixiert. Das Klemmelement 25 verfügt im Querschnitt über die Form eines offenen Rings und ist als sogenanntes C-Rohr ausgebildet. Die Borstenelemente 22 können auch anderweitig fixiert sein, z.B. durch Schweißen oder Kleben.

Die Einspannstelle 23 ist gemäß Figur 2 in einer Ausnehmung 26 des Gehäuses 10 positioniert. Mit freien Enden 27 liegen die Borstenelemente 22 der zweiten Dichtungseinrichtung 21 an den inneren Kanten 17 der Schaufelsegmente 11, 12, 13, 14, 15 an, und zwar unabhängig davon, ob ein radialer Versatz zwischen den Schaufelsegmenten 11, 12, 13, 14 und 15 vorliegt oder nicht. In diesem Zusammenhang ist von Bedeutung, dass die Borstenelemente 22 radial in Umfangsrichtung angestellt sind. Hierdurch lässt sich eine definierte Anlage der Enden 27 der Borstenelemente 22 an den inneren Kanten 17 der Schaufelsegmente 11, 12, 13, 14 und 15 erzielen. Ist die Breite des Spalts 18 vergrößert, so fällt die Anstellung der Borstenelemente 22 geringer aus. Ist hingegen die Breite des Spalts 18 verkleinert, so sind die Borstenelemente 22 stärker angestellt. Zudem können die Borstenelemente 22 von der Radialen in Axialrichtung angestellt sein und an der ersten Dichtungseinrichtung 20 zur besseren Dichtwirkung anliegen.

Wie insbesondere Figur 2 entnommen werden kann, bildet die als Ringdichtung ausgebildete erste Dichtungseinrichtung 20 eine Stützplatte für die Borstenelemente 22 der als Bürstendichtung ausgebildeten zweiten Dichtungseinrichtung 21. Die Borstenelemente 22 liegen abschnittsweise an der Ringdichtung an und werden so in ihrer Position stabilisiert.

Die Ausnehmung 26 im Gehäuse 10 zur Aufnahme der Einspannstelle 23 der Bürstendichtung dient ebenfalls der Aufnahme der Ringdichtung. In einem der Ringdichtung zugewandten Bereich verfügt die Ausnehmung 26 hierzu über einen Absatz 28, wobei die Ringdichtung mit einem Ende an den Absatz 28 angrenzt. Mit einem gegenüberliegenden Ende liegt die Ringdichtung im Bereich der Schaufelsegmente 12 und 14 an denselben an und dichtet so den Spalt 18 ab. Für die radial versetzten Schaufelsegmente 11, 13, und 15 hingegen liegt die Ringdichtung nicht an denselben an, sondern lässt vielmehr einen durch die Zwischenräume 19 definierten Teilspalt frei. Dieser wird jedoch durch die Bürstendichtung abgedichtet (siehe Figur 1).

Die als Ringdichtung ausgebildete erste Dichtungseinrichtung 20 und die als Bürstendichtung ausgebildete zweite Dichtungseinrichtung 21 sind ebenso wie das Gehäuse 10 und die Leitschaufel rotationssymmetrisch ausgebildet und zwischen diesen beiden konzentrisch angeordneten, rotationssymmetrischen Bauteilen positioniert.

In dem Fall, in welchem die Bürstendichtung 21 in geschlossener Bauform ausgeführt ist, wird dieselbe in die Ausnehmung 26 des Gehäuses 10 in axialer Richtung eingeschoben und in dieser Position durch einen Befestigungsring 29 fixiert. Gegenüberliegend zum Absatz 28 wird die Ausnehmung 26 durch den Befestigungsring 29 begrenzt, der im gezeigten Ausführungsbeispiel als separates Element ausgeführt ist.

Es ist jedoch ebenfalls möglich, dass der Befestigungsring 29 integraler Bestandteil des Gehäuses 10 ist. In diesem Fall ist die Bürstendichtung 21 dann in offener Bauform ausgeführt ist. Die Bürstendichtung kann in dieser Ausführungsform wie ein durchtrennter Ring aufgebogen werden und über den Befestigungsring 29 hinweg in die Ausnehmung 26 des Gehäuses 10 eingelegt bzw. eingeschnappt werden.

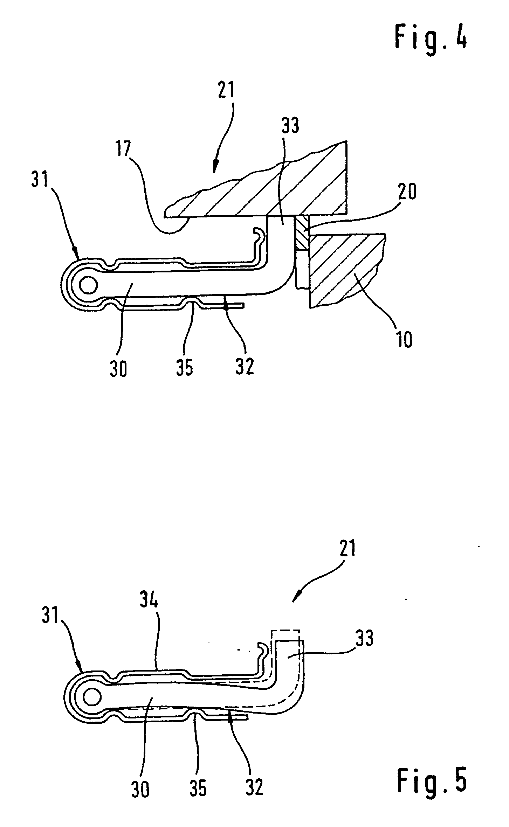

An Stelle der in Figuren 2 und 3 gezeigten Bürstendichtung kann die in Figuren 4 und 5 gezeigte Hakenbürstendichtung als zweite Dichtungseinrichtung 21 verwendet werden. Bei der Hakenbürstendichtung handelt es sich um eine spezielle Ausgestaltung einer Bürstendichtung, mit um ca. 90° abgewinkelten Borstenelementen 30.

Mit einer Einspannstelle 31 ist eine solche Hakenbürstendichtung dann in einer nicht gezeigten Ausnehmung des Gehäuses 10 fixiert, wobei sich ein erster Abschnitt 32 der Borstenelemente 30 in axialer Richtung des Gehäuses 10 erstreckt. Mit einem zweiten Abschnitt 33 der Borstenelemente 30, der gegenüber dem ersten Abschnitt 32 der Borstenelemente 30 um in etwa 90° abgewinkelt ist, liegen die Borstenelemente 30 dann an der inneren Kante 17 der Schaufelsegmente 11, 12, 13, 14 und 15 und an der ersten Dichtungseinrichtung 20 an. Zumindest der sich in axialer Richtung des Gehäuses 10 erstreckende erste Abschnitt 32 der Borstenelemente 30 kann von einer Hülle 34 umschlossen sein, wobei die Hülle 34 eine mittlere Einkerbung 35 aufweist. Zum Ausgleich von Unregelmäßigkeiten des abzudichtenden Spalts 18 können die Borstenelemente 30 entlang der Einkerbung 35 verbogen werden, so dass die Borstenelemente 30 von der in Figur 5 gestrichelt dargestellten Position in die in Figur 5 mit durchgezogenen Strichen dargestellte Position übergehen. Das geschieht dann, wenn die Breite des abzudichtenden Spalts verkürzt ist. Mit einer solchen Hakenbürstendichtung kann die Bauform nochmals komprimiert werden.

Fig. 1 zeigt eine Trennstelle 40 von der als Kolbenringdichtung ausgebildeten, ersten Dichtungseinrichtung 20, wodurch sich deren Durchmesser begrenzt elastisch anpassen kann. Die Trennstelle 40 kann beliebig ausgebildet sein, z.B. überlappend. Bei zwei ersten Dichtungseinrichtungen 20 sollten die Trennstellen 40 in Umfangsrichtung um 180° versetzt sein. Auch im Hinblick auf etwaigen Leckagen im Bereich der Trennstelle 40 verbessert die zweite Dichtungseinrichtung 21 die Dichtwirkung.

Im Sinne der Erfindung wird eine besonders effektive und konstruktiv einfache statische Abdichtung für Gasturbinen geschaffen. Ein Segmentversatz zwischen einzelnen Schaufelsegmenten der Leitschaufel einer Gasturbine, der sich beim Betrieb der Gasturbine einstellen kann, oder eventuelle Unrundungen des Gehäuses führen nicht zu Leckagen. Es kann in allen Situationen eine hohe Dichtigkeit gewährleistet werden. Die Borstenelemente der Bürstendichtung gleichen den Segmentversatz und Unrundungen aus. Es werden die Vorteile von Bürstendichtungen und Ringdichtungen bzw. Kolbenringdichtungen miteinander kombiniert.

Der Einsatz der erfindungsgemäßen Dichtungsanordnung ist nicht auf Gasturbinen beschränkt. Die Erfindung ist vielmehr überall dort einsetzbar, wo feststehende rotationssymmetrische Bauteile unter Verwendung einer statischen Dichtungsanordnung gegeneinander abzudichten sind.

## Patentansprüche

1. Dichtungsanordnung, wobei zwischen rotationssymmetrischen Bauteilen wenigstens eine erste, als Ringdichtung ausgebildete Dichtungseinrichtung (20) und zusätzlich eine zweite, als Bürstendichtung ausgebildete Dichtungseinrichtung (21) angeordnet sind, und wobei die zweite, als Bürstendichtung ausgebildete Dichtungseinrichtung (21) axial versetzt zur ersten, als Ringdichtung ausgebildeten Dichtungseinrichtung (20) angeordnet ist, **dadurch gekennzeichnet, dass** die wenigstens eine, erste, als Ringdichtung ausgebildete Dichtungseinrichtung (20) eine metallische Kolbenringdichtung mit einer Trennstelle (40) ist.

2. Dichtungsanordnung nach Anspruch 1, **dadurch gekennzeichnet, dass** die Bürstendichtung in geschlossener Bauform ausgeführt ist.

3. Dichtungsanordnung nach Anspruch 1, **dadurch gekennzeichnet, dass** die Bürstendichtung in offener bzw. geteilter Bauform ausgeführt ist.

4. Dichtungsanordnung nach einem der Ansprüche 1 bis 3, **dadurch gekennzeichnet, dass** die Bürstendichtung als Hakenbürstendichtung ausgebildet ist.

5. Dichtungsanordnung nach einem der Ansprüche 1 bis 4, **dadurch gekennzeichnet, dass** die Bürstendichtung mehrere Bürstenelemente (22, 30) aufweist.

6. Dichtungsanordnung nach Anspruch 5, **dadurch gekennzeichnet, dass** die Borstenelemente (22) unter Bildung einer Einspannstelle (23) um ein Führungselement (24) gewickelt und mit einem Klemmelement (25) an dem Führungselement (24) fixiert sind.

7. Dichtungsanordnung nach einem der Ansprüche 1 bis 6, **dadurch gekennzeichnet, dass** die zweite, als Bürstendichtung ausgebildete Dichtungseinrichtung (21) mit einem Ende in einer Ausnehmung (26) eines ersten rotationssymmetrischen Bauteils angeordnet ist.

8. Dichtungsanordnung nach Anspruch 7, **dadurch gekennzeichnet, dass** die Bürstendichtung derart in der Ausnehmung (26) angeordnet ist, dass die Einspannstelle (23) in der Ausnehmung (26) des ersten rotationssymmetrischen Bauteils positioniert ist und freie Enden (27) der Borstenelemente (22) sich in Richtung auf ein zweites rotationssymmetrisches Bauteil erstrecken.

9. Dichtungsanordnung nach Anspruch 8, **dadurch gekennzeichnet, dass** die freien Enden (27) der Borstenelemente (22) an dem zweiten rotationssymmetrischen Bauteil anliegen.

10. Dichtungsanordnung nach einem der voranstehenden Ansprüche, **dadurch gekennzeichnet, dass** die Borstenelemente (22) radial angestellt sind, derart, dass die Borstenelemente (22) einen in radialer Richtung gekrümmten Verlauf aufweisen.

11. Dichtungsanordnung nach einem der Ansprüche 1 bis 10, **dadurch gekennzeichnet, dass** die zweite, als Bürstendichtung ausgebildete Dichtungseinrichtung (21) sich in axialer Richtung der rotationssymmetrischen Bauteile unmittelbar an die erste, als Ringdichtung ausgebildete Dichtungseinrichtung (20) anschließt.

12. Dichtungsanordnung nach einem der Ansprüche 1 bis 11, **dadurch gekennzeichnet, dass** die erste, als Ringdichtung ausgebildete Dichtungseinrichtung (20) eine Stützplatte für die Borstenelemente (22) der zweiten, als Bürstendichtung ausgebildeten Dichtungseinrichtung (21) bildet.

13. Dichtungsanordnung nach einem der voranstehenden Ansprüche, **dadurch gekennzeichnet, dass** das zweite rotationssymmetrische Bauteil das erste rotationssymmetrische Bauteil umschließt, wobei das zweite Bauteil aus Segmenten aufgebaut sein kann.

14. Dichtungsanordnung nach einem der voranstehenden Ansprüche, **dadurch gekennzeichnet, dass** das erste rotationssymmetrische Bauteil als Gehäuse (10) einer Gasturbine und das zweite rotationssymmetrische Bauteil als Leitschaufelkranz der Gasturbine mit mehreren Schaufelsegmenten (11, 12, 13, 14, 15) ausgebildet ist, wobei zwischen dem Gehäuse (10) und den Schaufelsegmenten (11, 12, 13, 14, 15) zur Abdichtung eines Spalts (18, 19) die erste, als Ringdichtung ausgebildete Dichtungseinrichtung (20) und zusätzlich die zweite, als Bürstendichtung ausgebildete Dichtungseinrichtung (21) angeordnet ist.

## Claims

1. Sealing arrangement such that between rotationally symmetric components at least one first sealing device (20) made as a circumferential ring seal and in addition a second sealing device (21) made as a brush seal are arranged, the second sealing device (21) made as a brush seal being positioned axially offset relative to the first sealing device (20) made as a circumferential ring seal, **characterised in that** the at least one, first sealing device (20) made as a circumferential ring seal is a metallic piston-ring seal with a parting point (40).

2. Sealing arrangement according to Claim 1, **characterised in that** the brush seal is made as a closed structure.

3. Sealing arrangement according to Claim 1, **characterised in that** the brush seal is made as an open or split structure.

4. Sealing arrangement according to any of Claims 1 to 3, **characterised in that** the brush seal is made as a hook brush seal.

5. Sealing arrangement according to any of Claims 1 to 4, **characterised in that** the brush seal comprises several brush elements (22, 30).

6. Sealing arrangement according to Claim 5, **characterised in that** the brush elements (22) are wrapped around a guide element (24) to form a clamping point (23) and are fixed into the guide element (24), by means of a clamping element (25).

7. Sealing arrangement according to any of Claims 1 to 6, **characterised in that** the second sealing device (21) made as a brush seal is arranged with one end in a recess (26) of a first rotationally symmetric component.

8. Sealing arrangement according to Claim 7, **characterised in that** the brush seal is arranged in the recess (26) in such manner that the clamping point (23) is positioned in the recess (26) of the first rotationally symmetric component and free ends (27) of the brush elements (22) extend in the direction towards a second rotationally symmetric component.

9. Sealing arrangement according to Claim 8, **characterised in that** the free ends (27) of the brush elements (22) are in contact with the second rotationally symmetric component.

10. Sealing arrangement according to any of the preceding claims, **characterised in that** the brush elements (22) are radially inclined in such manner that the brush elements (22) show a curvature in the radial direction.

11. Sealing arrangement according to any of Claims 1 to 10, **characterised in that** the second sealing device (21) made as a brush seal is immediately adjacent, in the axial direction of the rotationally symmetric components, to the first sealing device (20) made as a circumferential ring seal.

12. Sealing arrangement according to any of Claims 1 to 11, **characterised in that** the first sealing device (20) made as a circumferential ring seal forms a supporting plate for the brush elements (22) of the second sealing device (21) made as a brush seal.

13. Sealing arrangement according to any of the preceding claims, **characterised in that** the second rotationally symmetric component encloses the first rotationally symmetric component, and the second component can be made in segments.

14. Sealing arrangement according to any of the preceding claims, **characterised in that** the first rotationally symmetric component is a housing (10) of a gas turbine and the second rotationally symmetric component is a guide vane ring of the gas turbine with several vane segments (11, 12, 13, 14, 15), and between the housing (10) and the vane segments (11, 12, 13, 14, 15) are arranged the first sealing device (20) made as a circumferential ring seal and in addition the second sealing device (21) made as a brush seal, in order to seal a gap (18, 19).

## Revendications

1. Ensemble joint, dans lequel sont disposés, entre des éléments de construction à symétrie de révolution, au moins un premier dispositif d'étanchéité (20) configuré sous forme de joint annulaire et additionnellement un second dispositif d'étanchéité (21) configuré sous forme de joint à brosse, et dans lequel le second dispositif d'étanchéité (21) configuré sous forme de joint à brosse est disposé de manière axialement décalée vis-à-vis du premier dispositif d'étanchéité (20) configuré sous forme de joint annulaire, **caractérisé en ce qu'**au moins un premier dispositif d'étanchéité (20) configuré sous forme annulaire est un joint métallique à segment de piston comportant un point de rupture (40).

2. Ensemble joint selon la revendication 1, **caractérisé en ce que** le joint à brosse est conçu selon un mode de construction fermé.

3. Ensemble joint selon la revendication 1, **caractérisé en ce que** le joint à brosse est conçu selon un mode de construction ouvert ou divisé.

4. Ensemble joint selon l'une des revendications 1 à 3, **caractérisé en ce que** le joint à brosse est configuré sous forme de joint à brosse à crochet.

5. Ensemble joint selon l'une des revendications 1 à 4, **caractérisé en ce que** le joint à brosse comporte plusieurs éléments à poil de brosserie (22, 30).

6. Ensemble joint selon la revendication 5, **caractérisé en ce que** les éléments à poil de brosserie (22) sont enroulés autour d'un élément de guidage (24) et fixés sur cet élément de guidage (24) à l'aide d'un élément de serrage (25), en formant un point d'encastrement (23).

7. Ensemble joint selon l'une des revendications 1 à 6, **caractérisé en ce que** le second dispositif d'étanchéité (21), configuré sous forme de joint à brosse, est disposé, par l'une de ses extrémités, dans un évidement (26) d'un premier élément de construction à symétrie de révolution.

8. Ensemble joint selon la revendication 7, **caractérisé en ce que** le joint à brosse est disposé de telle manière dans l'évidement (26) que le point d'encastrement (23) est mis en place dans l'évidement (26) du premier élément de construction à symétrie de révolution et que les extrémités libres (27) des éléments à poil de brosserie (22) s'étendent en direction d'un second élément de construction à symétrie de révolution.

9. Ensemble joint selon la revendication 8, **caractérisé en ce que** les extrémités libres (27) des éléments à poil de brosserie (22) adhèrent au second élément de construction à symétrie de révolution.

10. Ensemble joint selon l'une des revendications précédentes, **caractérisé en ce que** les éléments à poil de brosserie (22) sont mis en place radialement, de telle manière que ces éléments à poil de brosserie (22) présentent une allure courbée dans la direction radiale.

11. Ensemble joint selon l'une des revendications 1 à 10, **caractérisé en ce que** le second dispositif d'étanchéité (21), configuré sous forme de joint à brosse, se raccorde, dans la direction axiale des éléments de construction à symétrie de révolution, directement au premier dispositif d'étanchéité (20), configuré sous forme de joint annulaire.

12. Ensemble joint selon l'une des revendications 1 à 11, **caractérisé en ce que** le premier dispositif d'étanchéité (20), configuré sous forme de joint annulaire, forme une plaque d'appui pour les éléments à poil de brosserie (22) du second dispositif de joint (21) configuré sous forme de joint à brosse.

13. Ensemble joint selon l'une des revendications précédentes, **caractérisé en ce que** le second élément de construction à symétrie de révolution entoure le premier élément de construction à symétrie de révolution, le second élément de construction pouvant être constitué à partir de segments.

14. Ensemble joint selon l'une des revendications précédentes, **caractérisé en ce que** le premier élément de construction à symétrie de révolution est conçu comme boîtier (10) d'une turbine à gaz et le second élément de construction à symétrie de révolution est conçu comme stator de la turbine à gaz comportant plusieurs segments à pale (11, 12, 13, 14, 15), et qu'entre le boîtier (10) et les segments à pale (11, 12, 13, 14, 15) sont disposés, en vue de l'étanchéification d'une fente (18, 19), le premier dispositif d'étanchéité (20) configuré sous forme d'un joint annulaire et additionnellement le second dispositif d'étanchéité (21), configuré sous forme de joint à brosse.
